# EUROPÄISCHE PATENTSCHRIFT

(11) **EP 2 604 043 B1**
(45) Veröffentlichungstag und Bekanntmachung des Hinweises auf die Patenterteilung: **30.11.2016**
(21) Anmeldenummer: 11749340.3
(22) Anmeldetag: 03.08.2011
(51) Int. Cl.: H04Q 3/52, H03K 19/17, H01H 1/00, H01H 67/22

(54) **SCHALTMATRIXVORRICHTUNG FÜR ELEKTRISCHE SIGNALE**
SWITCH MATRIX DEVICE FOR ELECTRICAL SIGNALS
DISPOSITIF DE MATRICE DE COMMUTATION POUR SIGNAUX ÉLECTRIQUES

(30) Priorität: 10.08.2010 DE 102010036927
(43) Veröffentlichungstag der Anmeldung: 19.06.2013
(73) Patentinhaber: Technische Universität München, 80333 München (DE)
(72) Erfinder: KNOGL, J. Sebastian, 80803 München (DE); GÜNTHER, Christoph, 82234 Oberpfaffenhofen (DE)
(74) Vertreter: Lucke, Andreas
(86) Internationale Anmeldenummer: PCT/EP2011/003891
(87) Internationale Veröffentlichungsnummer: WO 2012/019732

(56) Entgegenhaltungen:
- US-A- 4 821 034
- US-A- 5 504 825
- US-A1- 2005 041 654
- US-B1- 6 430 273
- KING YUK CHAN ET AL: "Scalable RF MEMS Switch Matrices: Methodology and Design", IEEE TRANSACTIONS ON MICROWAVE THEORY AND TECHNIQUES, IEEE SERVICE CENTER, PISCATAWAY, NJ, US, Bd. 57, Nr. 6, 1. Juni 2009 (2009-06-01), Seiten 1612-1621, XP011257821, ISSN: 0018-9480

## Beschreibung

### Gebiet der Erfindung

Die vorliegende Erfindung betrifft Schaltstrukturen für elektrische Signale, und insbesondere Schaltmatrixvorrichtungen mit einer Vielzahl von Schaltknoten, durch deren Betätigung Signaleingänge und Signalausgänge wahlweise verbunden werden können.

### Stand der Technik

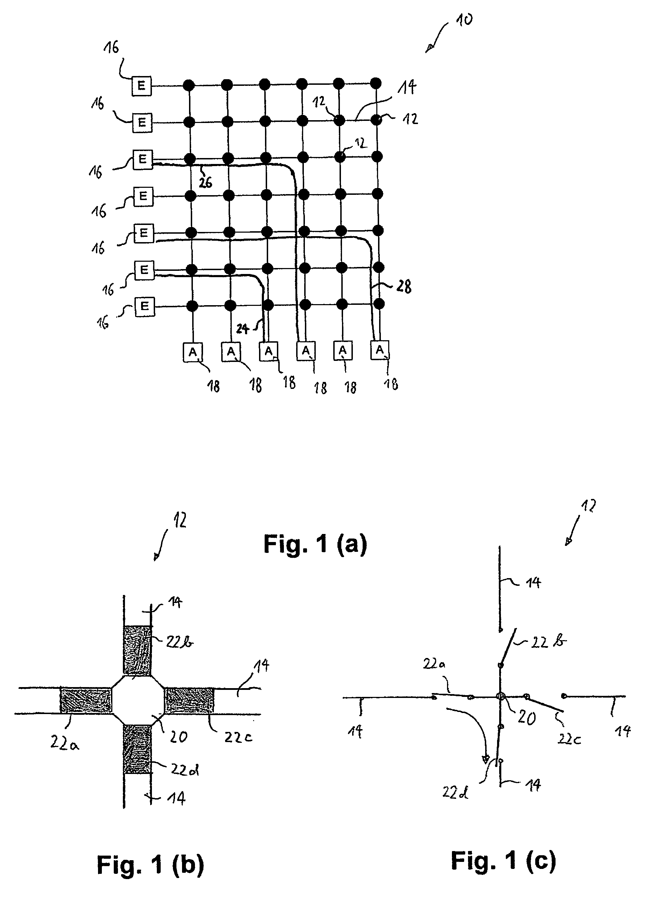

Eine Schaltmatrix 10 nach dem Stand der Technik ist in Fig. 1(a) gezeigt. Die Schaltmatrix 10 umfasst eine Vielzahl von Schaltknoten 12, die matrixartig in Zeilen und Spalten angeordnet sind. Zwischen je zwei benachbarten Schaltknoten innerhalb derselben Zeile bzw. Spalte sind Verbindungsabschnitte 14 vorgesehen. In der Schaltmatrix von Fig. 1(a) ist an jedem Zeilenanfang, d. h. dem linken Ende einer jeden Zeile ein Signaleingang 16 vorgesehen. Auf ähnliche Weise ist an jedem Spaltenende, d. h. dem unteren Ende einer jeden Spalte ein Signalausgang 18 vorgesehen.

In Figuren 1(b) und 1(c) ist jeweils ein Schaltknoten 12 schematisch dargestellt. Wie Fig. 1(b) zu entnehmen ist, besteht ein üblicher Schaltknoten 12 aus einem leitenden Knotenpunkt 20, auf den vier Verbindungsabschnitte 14 zulaufen, wobei benachbarte Verbindungsabschnitte jeweils einen Winkel von 90° bilden. Zwischen dem Knotenpunkt 20 und den diesem zugewandten Enden der Verbindungsabschnitte 14 ist jeweils ein Schalter 22a-d vorgesehen, der in der Darstellung dieser Offenbarung als dunkler Abschnitt dargestellt ist. Fig. 1(c) zeigt zum Vergleich denselben Knoten 12 unter Verwendung der in der Elektrotechnik üblichen Symbole für Leiter und Schalter. In der Darstellung von Fig. 1(c) sind die Schalter 22a und 22d geschlossen. Dadurch wird ein von einem Eingang 16 kommendes Signal auf eine Spalte und somit in Richtung auf einen Signalausgang 18 umgelenkt. Gleichzeitig ist der dem Signalausgang 18 abgewandte Abschnitt der Spalte und der dem Signaleingang 16 abgewandte Abschnitt der Zeile durch Öffnen des Schalters 22b bzw. 22c vom Knotenpunkt 20 getrennt.

Grundsätzlich wäre es zwar möglich, mit einem einzigen Schalter einen Zeilenleiter und einen Spaltenleiter als Ganzes zu verbinden, ohne den nicht genutzten Teil der Zeile bzw. Spalte abzukoppeln. Das Abkoppeln der nicht genutzten Teile von Zeile oder Spalte hat jedoch zwei wichtige Vorteile, die die Verwendung von vier Schaltern 22a-22d rechtfertigen: Zum einen würden ungenutzte Spalten- bzw. Zeilenenden bei Hochfrequenzanwendungen zu Signalstörungen fahren.

Zweitens erlauben Schaltknoten 12 mit vier Schaltern 22a-22d es grundsätzlich, mehrere Paare von Signaleingängen 16 und Signalausgängen 18 miteinander zu verbinden.

Unter Bezugnahme auf Fig. 1(a) kann beispielsweise der Eingang 16 der zweiten Zeile mit dem Ausgang 18 der dritten Spalte und gleichzeitig der Eingang 16 der fünften Zeile mit dem Ausgang der vierten Spalte (jeweils gezählt von der linken unteren Ecke der Schaltmatrix 10) verbunden werden, wie durch die schematisch durch durchgezogne Linien 24 bzw. 26 dargestellten Signalwege gezeigt ist. Allerdings ist es beispielsweise nicht möglich, gleichzeitig mit dem Signalweg 26 (d. h. der Verbindung des fünften Eingangs 16 mit dem vierten Ausgang 18) einen Signalweg 28 zu verwirklichen, der den dritten Eingang 16 mit dem sechsten Ausgang 18 verbindet, weil die Signalwege sich kreuzen würden und zwei Signale nicht durch denselben Schaltknoten 12 geführt werden können. Eine derartige Unvereinbarkeit von Signalwegen 26, 28 wird in der vorliegenden Offenbarung als "Schaltkonflikt" bezeichnet.

Die herkömmliche Schaltmatrix 10 von Fig. 1(a) hat eine Reihe von praktischen Nachteilen. Ein erhebliches Problem besteht in der Schwächung bzw. Störung von Signalen in jedem Knotenpunkt 12, den sie passieren. Dieses Problem wird mit zunehmenden Frequenzen der Signale stärker. Bei der Schaltmatrix 10 von Fig. 1(a) hängt die mittlere Anzahl von Knoten 12 auf den Signalwegen von der Größe der Schaltmatrix 10 ab, die ihrerseits durch die Anzahl der benötigten Eingänge 16 und Ausgänge 18 festgelegt ist. Wenn also eine größere Anzahl von Eingängen und/oder Ausgängen benötigt wird, lässt sich ein entsprechender Anstieg in der mittleren Signalweglänge schlichtweg nicht vermeiden.

Ein weiteres Problem besteht darin, dass bei der Schaltmatrix 10 von Fig. 1(a) zwei unabhängig voneinander gewählte Signalwege mit einer 50-prozentigen Wahrscheinlichkeit zu einem Schaltkonflikt führen werden.

In der Schaltmatrix 10 von Fig. 1(a) ist die Anzahl von sieben Eingängen und sechs Ausgängen annähernd gleich. Falls die Anzahl von Eingängen und Ausgängen sich jedoch erheblich unterscheidet, beispielsweise um einen Faktor von 2, von 5 oder mehr werden Schaltmatritzen üblicherweise nicht verwendet. Stattdessen wird in diesem Fall üblicherweise Baumstrukturen der Vorzug gegeben, bei denen sich die gleiche Anzahl von Eingängen und Ausgängen typischerweise mit einer geringeren Anzahl von Schaltelementen und im Mittel kürzeren Signalwegen realisieren lässt, als bei einer Schaltmatrix mit derselben Anzahl von Ein- und Ausgängen.

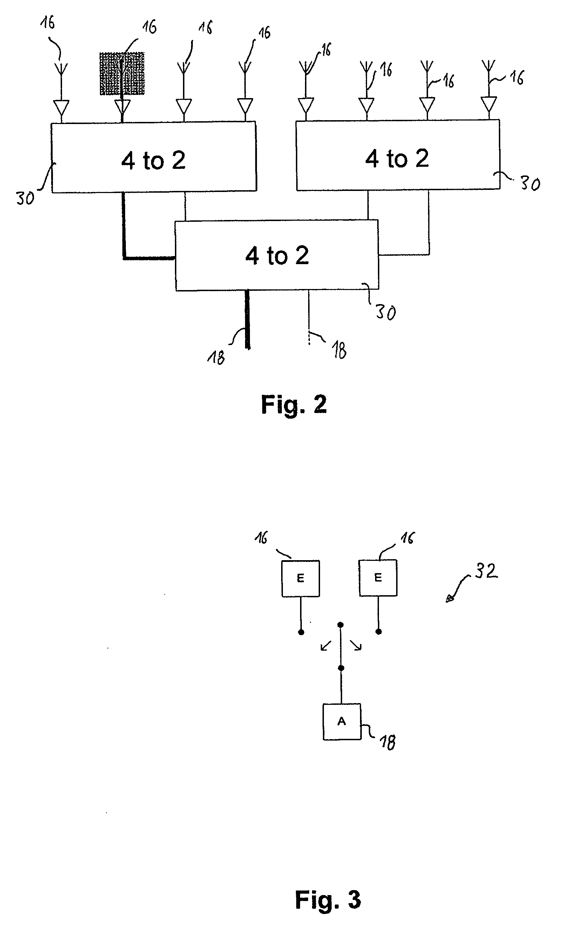

Ein Beispiel für eine Baumstruktur ist in Fig. 2 dargestellt, bei der drei gleichartige Schaltelemente 30 in einer Baumstruktur verknüpft sind. Jedes der Schaltelemente 30 hat vier Eingänge und zwei Ausgänge. Die "aktiven", d. h. für den Signaldurchgang verknüpften Leitungsabschnitte sind in Fig. 2 fett dargestellt. Die Baumstruktur von Fig. 2 kann beliebig fortgesetzt werden, indem jeweils die Ausgänge zweier Schaltelemente 30 mit den Eingängen eines Schaltelementes 30 verknüpft werden. Die einfachste Ausführung eines für eine Baumstruktur geeigneten Schaltelementes ist ein einfacher Kippschalter 32, wie er in Fig. 3 gezeigt ist, bei dem wahlweise einer von zwei Eingängen 16 mit einem Ausgang 18 verbunden werden kann. Selbstverständlich kann eine derartige Baumstruktur "in ungekehrter Richtung" verwendet werden, wenn die Zahl der Ausgänge gegenüber derjenigen der Eingänge überwiegt.

Allerdings bringt auch die Baumstruktur eine Reihe von Nachteilen mit sich. Ein wesentlicher Nachteil besteht darin, dass bereits durch die Baumstruktur festgelegt ist, welche Eingänge mit welchen Ausgängen kombinierbar sind, eine freie Kombinierbarkeit wie im Falle einer Matrix gibt es bei der üblichen Baumstruktur nicht. Obwohl es grundsätzlich möglich ist, in einer Baumstruktur mehrere Signalpfade gleichzeitig zu verwirklichen, kommt es auch bei dieser häufig zu Schaltkonflikten. Und schließlich ist die Baumstruktur relativ Störungsanfällig, weil ein einziger defekter Schalter den gesamten damit verbundenen Ast der Baumstruktur außer Betreib setzt,

Eine Schaltmatrixvorrichtung mit Schaltelementen, die in einem zellstrukturierten dreidimensionalen Volumen abgebildet sind, auf dessen Oberfläche Verkehrsverbindungen verbunden sind, ist aus dem Dokument US 2005/041654 A1 bekannt.

### Darstellung der Erfindung

Der Erfindung liegt die Aufgabe zugrunde, eine Schaltstruktur anzugeben, die geeignet ist, durch Bestätigung von Schaltknoten einen Signaleingang und einen Signalausgang aus einer Mehrzahl von Signaleingängen und/oder Signalausgängen zu verbinden und dabei die mittlere Zahl der zu durchlaufenden Knoten gering hält.

Diese Aufgabe wird durch eine Schaltmatrixvorrichtung nach Anspruch 1 gelöst. Vorteilhafte Weiterbildungen sind in den abhängigen Ansprüchen angegeben.

Die Schaltmatrixvorrichtung der Erfindung umfasst eine Mehrzahl von Schaltknoten, welche matrixartig in Zeilen und Spalten angeordnet sind. Der Begriff "matrixartig" weist hierbei lediglich darauf hin, dass die Knoten in Zeilen und Spalten angeordnet sind, die Zeilen oder Spalten müssen jedoch nicht alle dieselbe Länge bzw. Anzahl von Knoten haben. Auch ist eine "matrixartige" Anordnung im Sinne dieser Offenbarung nicht auf eine Anordnung in einem rechtwinkligen Gitter beschränkt, vielmehr können sich die Zeilen- und Spaltenverläufe in einem von 90° abweichenden Winkel schneiden.

Bei der Schaltmatrixvorrichtung der Erfindung sind benachbarte Schaltknoten innerhalb derselben Zeile bzw. Spalte durch Verbindungsabschnitte verbunden oder verbindbar, und zumindest ein Teil der Schaltknoten ist geeignet, zwei an den jeweiligen Schaltknoten angrenzende Verbindungsabschnitte wahlweise zu verbinden.

Erfindungsgemäß ist zumindest ein Teil der Signaleingänge und/oder Signalausgänge in der Fläche der Schaltmatrix angeordnet. Auf diese Weise lässt sich bezogen auf die Größe der Schaltmatrix bzw. die Anzahl von vorhandenen Schaltknoten eine weitaus größere Anzahl von Eingängen und/oder Ausgängen unterbringen. Grob gesprochen ist bei der Erfindung die Anzahl der möglichen Eingänge bzw. Ausgänge proportional zur Fläche der Schaltmatrix, nicht zu deren Kantenlänge. Mit anderen Worten kann die Schaltmatrix bei einer vorgegebenen Anzahl von Ein- und Ausgängen wesentlich kleiner dimensioniert sein als eine entsprechende herkömmliche Schaltmatrix nach Fig. 1(a). Dies hat zur Folge, dass der mittlere Signalweg zwischen einem Signaleingang und einem Signalausgang bzw. die mittlere Anzahl von zu passierenden Schaltknoten auf dem Signalweg - im Vergleich mit einer herkömmlichen Schaltmatrix nach Fig. 1(a) mit gleicher Anzahl von Eingängen und Ausgängen - wesentlich verringert werden kann.

Ferner zeigt sich, dass sich bei der erfindungsgemäßen Schaltmatrixanordnung, bei der zumindest ein Teil der Signaleingänge und/oder Signalausgänge in der Fläche der Schaltmatrix angeordnet ist, Schaltkonflikte wesentlich besser vermeiden lassen als bei einer herkömmlichen Baumstruktur nach Fig. 2 oder einer herkömmlichen Schaltmatrix nach Fig. 1(a). Dies wird unten anhand eines Ausführungsbeispieles näher erläutert.

Grundsätzlich lässt sich jedoch festhalten, dass die Anordnung der Signaleingänge und/oder Signalausgänge in der Fläche der Schaltmatrix die Möglichkeit eröffnet, die Orte der Signaleingänge bzw. -ausgänge in gewissem Rahmen frei zu wählen. Dieser Freiheitsgrad kann dann so genutzt werden, dass bereits die gewählte Anordnung von Signaleingängen und/oder -ausgängen die Wahrscheinlichkeit von Schaltkonflikten verringert. Man beachte, dass dies einen wesentlichen Unterschied zu der herkömmlichen Schaltmatrix 10 von Fig. 1(a) darstellt, deren Struktur und Anordnung der Signalein- und Signalausgänge bereits durch die erwünschte Anzahl von Signaleingängen und Signalausgängen vorgegeben ist, und bei der die Wahrscheinlichkeit, dass zwei zufällig ausgewählte Signalpfade zu einem Schaltkonflikt führen, grundsätzlich 50% beträgt.

Vorzugweise unterscheiden sich bei der Schaltmatrixvorrichtung die Anzahl von Signaleingängen und Signalausgängen um einen Faktor von mindestens 2, besonders vorzugsweise um einen Faktor von mindestens 5 und insbesondere einen Faktor von mindestens 10, wobei offen gelassen ist, welche der beiden Anzahlen die größere ist. Wie anhand eines Ausführungsbeispieles unten näher erläutert wird, eignet sich die Schaltmatrixvorrichtung der Erfindung ganz besonders für Fälle, in denen die Anzahl von Signaleingängen und Signalausgängen sich erheblich, d. h. im Rahmen der genannten Faktoren oder darüber hinaus unterscheiden. Dies ist ein erstaunliches und überraschendes Ergebnis, weil für diese Fälle im Stand der Technik grundsätzlich eine Baumstruktur anstatt einer Matrixstruktur herangezogen wird.

Vorzugsweise ist zumindest ein Teil der Signaleingänge und/oder Signalausgänge mit einem jeweils zugehörigen Verbindungsabschnitt verbunden oder mit diesem über einen Schalter oder eine Schaltstruktur verbindbar. Dabei ist der genannte zugehörige Verbindungsabschnitt in der Regel nicht an einer Randzeile oder Randspalte der Schaltmatrixvorrichtung angeordnet, sondern befindet sich typischerweise in der Fläche der Schaltmatrix. Durch die Einkopplung bzw. Auskopplung von Signalen in die bzw. aus den Verbindungsabschnitten lassen sich die Signalein- bzw. -ausgänge einfach und praktisch in der Fläche der Schaltmatrix unterbringen.

Vorzugsweise sind die Signaleingänge überwiegend oder ausschließlich mit den Verbindungsabschnitten der Spalten und die Signalausgänge überwiegend oder ausschließlich mit den Verbindungsabschnitten der Zeilen verbindbar oder verbunden, oder umgekehrt.

Vorzugsweise sind zumindest mit einem Teil der Verbindungsabschnitte jeweils mehr als ein Signaleingang oder Signalausgang verbindbar oder verbunden. Auf diese Weise lässt sich eine noch größere Anzahl von Signalein- bzw. -ausgängen in der Schaltmatrix unterbringen.

Vorzugsweise ist ferner eine Signaleingangs- und/oder eine Signalausgangs-Schaltstruktur vorgesehen, die geeignet ist, den Signaleingang bzw. Signalausgang wahlweise mit einem der an den Verbindungsabschnitt angrenzenden Knoten leitend zu verbinden und gleichzeitig eine leitende Verbindung zwischen dem Signaleingang bzw. Signalausgang und dem anderen an den Verbindungsabschnitt angrenzenden Knoten zu trennen. Diese Signaleingangs- bzw. Signalausgangs-Schaltstruktur ermöglicht es also, dass der Signalein- bzw. -ausgang bereits einem der an den Verbindungsabschnitt angrenzenden Knoten zugeordnet ist. Dadurch lassen sich Schaltkonflikte weiter vermeiden.

In einer bevorzugten Ausführungsform der genannten Signaleingangs- oder Signalausgangs-Schaltstruktur umfasst diese:
- einen ersten Schalter, der geeignet ist, eine leitende Verbindung zwischen einem ersten und einem zweiten Abschnitt des Verbindungsabschnitts zu unterbrechen,
- einen zweiten Schalter, der geeignet ist, den Signaleingang bzw. Signalausgang mit dem ersten Abschnitt des Verbindungsabschnitts zu verbinden, und
- einen dritten Schalter, der geeignet ist, den Signaleingang bzw. Signalausgang mit dem zweiten Abschnitt des Verbindungsabschnitts zu verbinden.

In einer solchen Schaltstruktur können der erste, der zweite und der dritte Schalter auf den Seiten eines gleichschenkligen, insbesondere eines näherungsweise gleichseitigen Dreiecks angeordnet sein. Dies hat den Vorteil, dass das Signal zwischen dem Signalein- bzw. -ausgang und dem Verbindungsabschnitt zweimal umgelenkt wird, jedoch jedes Mal um einen Winkel, der 90° übersteigt (beispielsweise 120° und 150° im Falle einer Anordnung der drei Schalter auf einem gleichseitigen Dreieck). Diese Anordnung ist hinsichtlich der Verluste und Störungen, insbesondere bei Hochfrequenzanwendungen, besser geeignet als eine Anordnung, bei der das Signal lediglich einmal um 90° umgelenkt würde.

Vorzugsweise weist zumindest ein Teil der Schaltknoten eine Schaltknoten-Schaltstruktur auf, die geeignet ist, von den vier an den Schaltknoten angrenzenden Enden von Verbindungsabschnitten jeweils zwei benachbarte Verbindungsabschnitte elektrisch zu verbinden, jedoch die beiden Paare von verbundenen Verbindungsabschnitten untereinander bezüglich einer Signalübertragung, insbesondere galvanisch zu trennen. In der Praxis ist eine echte galvanische Trennung nicht unbedingt erforderlich, stattdessen kann auch eine Trennung, die lediglich eine Signaldämpfung in ausreichendem Umfang bewirkt, ausreichen. Dadurch wird es möglich, zwei Signale gleichzeitig durch denselben Schaltknoten zu leiten und somit Schaltkonflikte zu vermeiden. Man beachte, dass eine derartige Schaltknoten-Schaltstruktur für sich genommen bereits aus dem Artikel "Scalable RF MEMS Switch Matrices: Methodology and Design", IEEE Transactions on Microwave Theory and Techniques, Vol. 57, No. 6, Juni 2009 bekannt ist.

Vorzugsweise umfasst die Schaltknoten-Schaltstruktur vier Schaltelemente, von denen jeweils eines zwischen den an den Schaltknoten angrenzenden Enden jeweils zweier benachbarter Verbindungsabschnitte angeordnet ist. Hierbei sind die "benachbarten" Verbindungsabschnitte solche Verbindungsabschnitte, die in Umfangsrichtung um den Schaltknoten herum betrachtet "benachbart" sind. Einem Zeilen-Verbindungsabschnitt wären somit die beiden an denselben Knoten angrenzenden Spalten-Verbindungsabschnitte benachbart und umgekehrt.

Vorzugsweise sind die Schaltknoten, die Signaleingangs-Schaltstrukturen und/oder die Signalausgangs-Schaltstrukturen durch austauschbare, vorgefertigte Bauteile gebildet, und insbesondere als mikro-elektromechanische Systeme (MEMS) ausgeführt.

In einer vorteilhaften Weiterbildung sind mindestens zwei der Signalausgänge und/oder Signaleingänge mit einem Gesamtausgang bzw. Gesamteingang verbunden oder über eine Schaltstruktur, insbesondere eine Baumstruktur verbindbar. Dies bedeutet, dass eine Auswahl unter einer Mehrzahl von Signalausgängen innerhalb der Schaltmatrix getroffen werden kann, um ein Signal an einen vorbestimmten Gesamtausgang zu leiten. Der geeignete Signalausgang der Schaltmatrix kann dann beispielsweise so gewählt werden, dass der Signalweg innerhalb der Schaltmatrix möglichst kurz ist und/oder Schaltkonflikte mit anderen aktuellen Signalwegen vermieden werden. Man beachte, dass man sich im Rahmen der Erfindung diese Art der Redundanz leisten kann, ohne die Matrix als Ganzes aufzublasen, weil eine Vielzahl von Signalausgängen in der Fläche der Schaltmatrix untergebracht werden können, ohne dass die Schaltmatrix als solche vergrößert werden müsste. Gleiches gilt selbstverständlich, wenn eine Mehrzahl von Signaleingängen mit einem Gesamteingang zu verbinden ist.

Vorzugsweise sind bei der Schaltmatrixvorrichtung die Zeilen und Spalten unter einem von 90° verschiedenen Winkel, vorzugsweise unter einem Winkel von 45° bis 75° und besonders vorzugsweise unter einem Winkel von 60° angeordnet. Dies bedeutet, dass es für den Übergang zwischen Zeilen und Spalten zwei mögliche Winkel gibt, eine spitzen (beispielsweise 60°) und einen stumpfen (beispielsweise 120°). Die Schaltmatrixvorrichtung kann dann so angesteuert werden, dass der Signalweg vorzugsweise über die stumpfen Winkel geführt wird, so dass beim Übergang zwischen Zeile und Spalte geringere Verluste auftreten.

In einer besonders bevorzugten Ausführungsform beträgt der Winkel 60° und sind die Schaltknoten auf einem Hexagonalgitter angeordnet. Wenn die Schaltmatrix eine Hexagonalstruktur aufweist, lassen sich auch die Signalein- und/oder -ausgänge in einer Hexagonalstruktur anordnen. Diese stellt bei einem vorgegebenen Mindestabstand zwischen benachbarten Signalein- und/oder -ausgängen die platzsparendste Anordnung dar.

Die Erfindung betrifft ferner eine Schaltmatrixanordnung, die mindestens zwei Schaltmatrixvorrichtungen nach einer der oben beschriebenen Ausführungsformen umfasst, die übereinander gestapelt angeordnet sind. Durch die Verwendung von n übereinander gestapelten Schaltmatrixvorrichtungen brauchen dann von insgesamt N Signaleingängen jeweils nur N/n auf jeder Ebene eingespeist zu werden. Dies lässt mehr Platz für die zugehörige Eingangsignal-Schaltstruktur, die zum Einspeisen des Eingangssignals in den betreffenden Verbindungsabschnitt benötigt wird. Die mit dem Signaleingang verbunden Signalleitungen könnten dann beispielsweise als Bündel senkrecht von oben auf die oberste Schaltmatrixvorrichtung zugeführt werden. Jede einzelne Signalleitung des Bündels wird dann durch alle über der zugehörigen Schaltmatrixvorrichtung liegenden Schaltmatrixvorrichtungen hindurchgeführt.

Vorzugsweise sind mindestens zwei der Signalausgänge und/oder der Signaleingänge auf verschiedenen Schaltmatrixvorrichtungen verbunden, verbindbar oder mit einem gemeinsamen Gesamtausgang bzw. Gesamteingang verbindbar.

Die Schaltmatrixvorrichtung oder Schaltmatrixanordnung umfasst ferner vorzugsweise eine Steuerung zum Betätigen der Schaltknoten und/oder der Signaleingangs-Schaltstrukturen und/oder der Signalausgangs-Schaltstrukturen derart, dass eine Verbindung zwischen einem vorbestimmten Signaleingang oder Gesamtsignaleingang und einem vorbestimmten Signalausgang oder Gesamtsignalausgang hergestellt wird. Die Steuerung ist dazu eingerichtet, den hierzu optimalen Signalpfad zu ermitteln und die Schaltknoten und Schaltstrukturen entsprechend anzusteuern. Insbesondere wenn zwei oder mehr der Signalausgänge und/oder Signaleingänge mit einem Gesamtausgang bzw. Gesamteingang verbunden oder über eine Schaltstruktur verbindbar sind, ergibt sich eine Mehrzahl von möglichen Signalpfaden, von denen die Steuerung den geeignetsten auswählt.

Bei der Ermittlung des geeignetsten Signalpfades kann die Steuerung eines oder mehrere der folgenden Kriterien oder eine Kombination dieser Kriterien zugrunde legen:
- Der Signalweg sollte möglichst wenige Schaltknoten passieren,
- der Signalweg wird so gewählt, dass er bei einem Wechsel zwischen einem Signalweg entlang einer Zeile und einem Signalweg entlang einer Spalte vorzugsweise entlang des größeren Winkels zwischen Spalten- und Zeilenverlauf verläuft,
- der Signalweg wird so gewählt, dass er mit einem weiteren gewünschten Signalweg zwischen einem anderen Signaleingang und einem anderen Signalausgang vereinbar ist, und/oder
- der Signalweg wird so gewählt, dass er einen defekten Schaltknoten und/oder einen defekten Verbindungsabschnitt vermeidet.

Vorzugsweise ist die Schaltmatrixvorrichtung nach einer der vorstehend beschriebenen Ausführungsformen für die Schaltung von Hochfrequenzsignalen geeignet. In einer besonders vorteilhaften Anwendung ist die Schaltmatrixvorrichtung angeschlossen, um eine frei wählbare Verbindung zwischen Antennenelementen und Transpondern herzustellen, insbesondere in einer Relaisstation für Satelliten.

Bei derartigen Relaisstationen stellt sich die Aufgabe, dass eine Auswahl aus einer sehr großen Anzahl von Antennensignalen möglichst verlustfrei auf eine wesentlich geringere Anzahl von Transpondern übertragen werden muss. Hierfür ist die Schaltmatrixvorrichtung nach einer der vorstehend beschriebenen Ausführungsformen idealer Weise geeignet. Insbesondere erlaubt sie es, die erforderliche Schaltkombinatorik mit einer erstaunlich geringen Anzahl an Schaltelementen zu bewerkstelligen, was nicht nur im Hinblick auf den Signalverlust, sondern auch im Hinblick auf das Gewicht der Schaltmatrixvorrichtung von Vorteil ist, welches bei Satellitenanwendungen immer eine kritische Rolle spielt.

In einer vorteilhaften Weiterbildung ist die Schaltknoten-Schaltstruktur geeignet, von den vier an den Schaltknoten angrenzenden Enden von Verbindungsabschnitten zwei gegenüberliegende Verbindungsabschnitte elektrisch zu verbinden, jedoch benachbarte Verbindungsabschnitte untereinander galvanisch zu trennen. Hierfür umfasst die Schaltknoten-Schaltstruktur vorzugsweise ein fünftes Schaltelement, welches in der selben Ebene liegt, wie die an den Schaltknoten angrenzenden Verbindungsabschnitte und das geeignet ist, zwei gegenüberliegende Verbindungsabschnitte eines ersten Paares miteinander zu verbinden. Vorzugsweise umfasst die Schaltknoten-Schaltstruktur ferner ein sechstes Schaltelement, welches in einer von der genannten Ebene beabstandeten Ebene liegt und geeignet ist, die zwei gegenüberliegenden Verbindungsabschnitte, die nicht Bestandteil des ersten Paares sind, miteinander zu verbinden. In dieser Ausführungsform kann die Schaltknoten-Schaltstruktur jedes der an den Schaltknoten angrenzenden Enden von Verbindungsabschnitten 42 wahlweise mit jedem anderen verbinden. Dadurch erhöht sich die Anzahl der möglichen Signalwege, und die Signalwege können insgesamt verkürzt werden.

Vorzugsweise umfasst die Schaltknoten-Schaltstruktur zwei Leiterabschnitte, die zwischen der genannten Ebene und der Ebene des sechsten Schaltelements verlaufen und die jeweils einen der zwei Verbindungsabschnitte, die nicht Bestandteil des genannten ersten Paares sind, mit dem zugehörigen Ende des sechsten Schaltelementes verbinden. Durch diese Leiterabschnitte kann für die Signalübertragung über das sechste Schaltelement von der genannten Ebene auf die weitere Ebene ausgewichen werden. Vorzugsweise werden die genannte Ebene und die weitere Ebene durch zwei übereinander gestapelte Schaltmatrixvorrichtungen gebildet.

Eine vorteilhafte Weiterbildung betrifft ferner eine Schaltmatrixanordnung, die Folgendes umfasst: mindestens eine Schaltmatrixvorrichtung nach einer der vorstehend beschriebenen Arten, einer Anzahl erster Eingänge, und eine Kombinationsschalteinrichtung, die geeignet ist, eine aus einer Mehrzahl möglicher Untergruppen der ersten Eingänge galvanisch mit einem Signaleingang der mindestens einen Schaltmatrixvorrichtung zu verbinden. Dies ist beispielsweise dann von Bedeutung, wenn die Superposition von Signalen mehrerer Antennen gleichzeitig in ein und denselben Signaleingang eingespeist werden soll. Die betreffenden Antennen entsprechen dann der Untergruppe der ersten Eingänge, mit denen sie verbunden sind.

In einer vorteilhaften Ausführungsform umfasst die Kombinationsschalteinrichtung eine erste Kombinationsschaltung, die geeignet ist, sämtliche erste Eingänge der betreffenden Untergruppe mit einem Signalknoten zu verbinden, und eine zweite Kombinationsschaltung, die geeignet ist, einen aus einer Mehrzahl von möglichen Signalknoten wahlweise mit dem Signaleingang der mindestens einen Schaltmatrixvorrichtung zu verbinden. Die erste Kombinationsschaltung dient demnach grob gesprochen dazu, die Untergruppen auszuwählen. Die zweite Kombinationsschaltung gestattet es, eine von mehreren Untergruppen mit dem Signaleingang der mindestens einen Schaltmatrixvorrichtung zu verbinden. Letzteres ermöglicht es, die Anzahl von benötigten Signaleingängen der Schaltmatrixvorrichtung gegenüber der Anzahl von möglichen Untergruppen zu verringern.

Vorzugsweise sind die erste und die zweite Kombinationsschaltung übereinander gestapelt angeordnet. Vorzugsweise wird die Untergruppe der ersten Eingänge aus bis zu vier ersten Eingängen gebildet. Hierbei weist der Ausdruck "bis zu vier" darauf hin, dass die Untergruppe je nach Schaltzustand der ersten Kombinationsschaltung auch aus weniger als vier ersten Eingängen bestehen kann. Beispielsweise kann durch geeignete Betätigung bzw. Ansteuerung der ersten Kombinationsschaltung auch nur ein einziger erster Eingang mit dem Signalknoten und weiter mit dem Signaleingang der mindestens einen Schaltmatrixvorrichtung verbunden werden.

Vorzugsweise sind die ersten Eingänge in derselben zweidimensionalen Gitterstruktur angeordnet, wie die Signaleingänge der mindestens einen Schaltmatrixvorrichtung, jedoch mit halber Gitterkonstante. Die ersten Eingänge können mit Antennenelemente, insbesondere den Antenneelementen einer Relaisstation für Satelliten verbunden sein.

### Kurzbeschreibung der Figuren

Fig. 1(a) zeigt eine Schaltmatrix nach dem Stand der Technik;
Fig. 1(b) zeigt eine schematische Darstellung eines Schaltknotens für eine Schaltmatrix nach dem Stand der Technik;
Fig. 1(c) zeigt den Schaltknoten von Fig. 1(b), dargestellt mit üblichen Schaltkreissymbolen;
Fig. 2 zeigt eine Baum-Schaltstruktur;
Fig. 3 zeigt ein Schaltelement für eine Baum-Schaltstruktur;
Fig. 4(a) zeigt eine Schaltmatrixvorrichtung, die die obere Ebene einer Schaltmatrixanordnung bildet;
Fig. 4(b) zeigt eine Schaltmatrixvorrichtung, die die untere Ebene einer Schaltmatrixanordnung bildet;
Fig. 5(a) zeigt eine schematische Darstellung einer Schaltknoten-Schaltstruktur für einen Schaltknoten, an dem sich vier Verbindungsabschnitte treffen;
Fig. 5(b) zeigt eine schematische Darstellung einer Schaltknoten-Schaltstruktur für einen Schaltknoten, an dem sich drei Verbindungsabschnitte treffen;
Fig. 5(c) zeigt eine Signaleingangs- oder Signalausgangs-Schaltstruktur mit einem Ein- bzw. Ausgang;
Fig. 5(d) zeigt eine Signaleingangs- oder Signalausgangs-Schaltstruktur mit zwei Eingängen bzw. Ausgängen;
Fig. 6 zeigt schematisch eine Schaltstruktur, mit der sechs Signalausgänge oder -eingänge mit einem Gesamtausgang bzw. -eingang verbindbar sind,
Fig. 7 zeigt eine schematische Darstellung einer Schaltknoten-Schaltstruktur für einen Schaltknoten, an dem sich vier Verbindungsabschnitte treffen;
Fig. 8 zeigt eine Explosionsdarstellung einer Schaltmatrixanordnung aus mehreren übereinander gestapelten Schichten;
Fig. 9 zeigt einen Ausschnitt aus einer ersten Kombinationsschaltung der Schaltmatrixanordnung von Fig. 8;
Fig. 10 zeigt einen Ausschnitt aus einer zweiten Kombinationsschaltung der Schaltmatrixanordnung von Fig. 8;
Fig. 11(a)zeigt eine Schalteranordnung, wie sie in der ersten Kombinationsschaltung von Fig. 9 zur Anwendung kommt; und
Fig. 11(b) zeigt eine Schalteranordnung, wie sie in der zweiten Kombinationsschaltung von Fig. 10 zur Anwendung kommt.

### Beschreibung der bevorzugten Ausführungsform

Weitere Vorteile und Merkmale der Erfindung ergeben sich aus der folgenden Beschreibung, in der die Erfindung anhand eines Ausführungsbeispieles unter Bezugnahme auf die beigefügten Zeichnungen beschrieben wird.

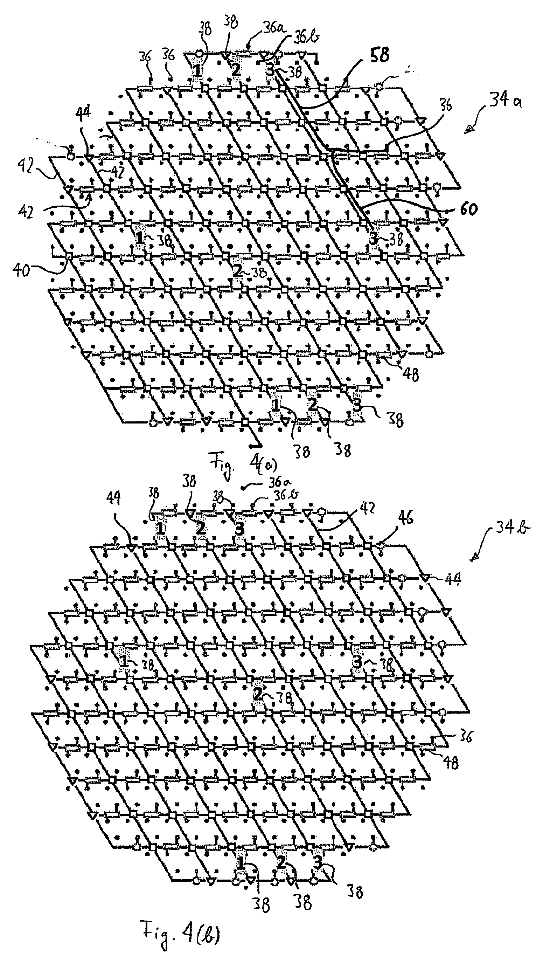

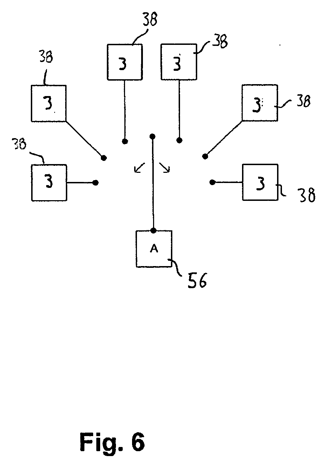

Fig. 4(a) und 4(b) zeigen jeweils eine Schaltmatrixvorrichtung 34a bzw. 34b nach einer Weiterbildung der Erfindung, die übereinander gestapelt angeordnet eine Schaltmatrixanordnung bilden. In dem konkreten Ausführungsbeispiel dient die Schaltmatrixanordnung dazu, einen jeden von 385 Signaleingängen 36, die in Figuren 4(a) und 4(b) als Punkte dargestellt sind, wahlweise mit einem von achtzehn Signalausgängen 38 zu verbinden, die in Figuren 4(a) und 4(b) durch die großen Zahlen 1, 2 und 3 gekennzeichnet sind. Jeweils sechs Signalausgänge 38, drei in jeder Schaltmatrixvorrichtung 34a, 34b, sind mit derselben Zahl 1, 2 bzw. 3 gekennzeichnet. Alle Signalausgänge 38, die mit derselben Zahl gekennzeichnet sind, werden durch eine Schaltstruktur (nicht gezeigt) mit einem Gesamtausgang 56 verbunden, der in Fig. 6 dargestellt ist.

Die gezeigte Schaltmatrixanordnung kann beispielsweise dazu verwendet werden, eine frei wählbare Verbindung zwischen einem beliebigen von 385 Antennenelementen auf einen von drei Transpondern herzustellen. Sie kann beispielsweise als Relaisstation für Satelliten in erdnahen Umlaufbahnen verwendet werden. Der Frequenzbereich der Eingangsignale kann bis zu 30 GHz betragen.

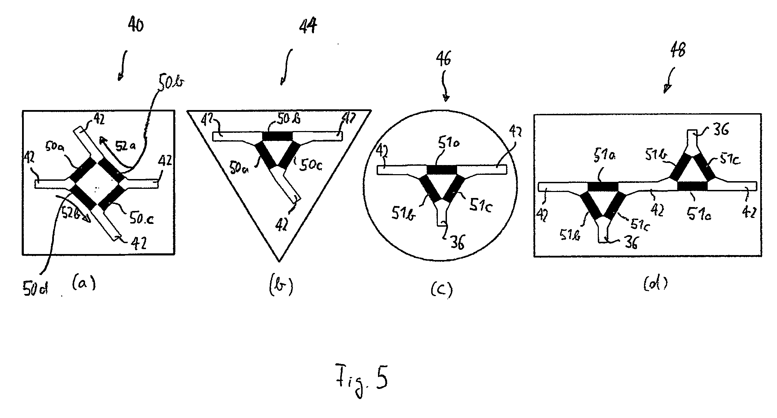

Wie Figuren 4(a) und 4(b) zu entnehmen ist, umfasst eine jede Schaltmatrixvorrichtung 34a, 34b eine Mehrzahl von Schaltknoten 40, die in Figuren 4(a) und 4(b) durch Quadrate repräsentiert sind. Der Aufbau eines jedes Schaltknotens 40 ist in Fig. 5(a) schematisch wiedergegeben.

Benachbarte Schaltknoten 40 sind durch Verbindungsabschnitte 42 verbunden bzw. verbindbar. An jeden der in Figuren 4(a) und 4(b) durch ein Quadrat repräsentierten Schaltknoten 40 grenzen vier Verbindungsabschnitte 42 an.

Am Rand der Schaltmatrixvorrichtung 34a, 34b sind ferner Schaltknoten 44 vorgesehen, die in Fig. 4(a) und 4(b) durch ein auf der Spitze stehendes Dreieck repräsentiert werden und an die lediglich drei Verbindungsabschnitte 42 angrenzen. Die Schaltstruktur eines solchen Schaltknotens 44 ist in Fig. 5(b) schematisch dargestellt, die die Bedeutung des Dreiecksymbols erläutert.

Die Schaltknoten sind matrixartig in Zeilen und Spalten angeordnet. Man beachte, dass der Begriff "matrixartig" in der vorliegenden Beschreibung keine weitere Beschränkung zum Ausdruck bringen soll, als dass die Schaltknoten 40, 44 in Zeilen und Spalten angeordnet sind. Der Begriff "matrixartig" impliziert jedoch beispielsweise nicht, dass die Zeilen und Spalten gleich lang oder im rechten Winkel zueinander angeordnet sein müssten. Im Gegenteil sind die Schaltknoten 40, 44 der gezeigten Schaltmatrixvorrichtungen 34a, 34b auf einem Hexagonal-Gitter angeordnet, und der Umfang der Schaltmatrixvorrichtungen 34a, 34b ist ebenfalls sechseckig und nicht etwa quadratisch.

In den Verbindungsabschnitten 42 der Zeilen sind ferner einfache Signaleingangs-Schaltstrukturen 46 und, weit überwiegend, doppelte Signaleingangs-Schaltstrukturen 48 angeordnet. Die einfache Signaleingangs-Schaltstruktur 46 ist in Figuren 4(a) und 4(b) durch einen Kreis repräsentiert und in Fig. 5(c) schematisch dargestellt. Sie dient dazu, einen einzigen Eingang 36 mit einem Verbindungsabschnitt 42 zu verbinden. Die doppelte Signaleingangs-Schaltstruktur 48 ist in Fig. 4(a), 4(b) durch ein Rechteck dargestellt, und ihr Aufbau ist in Fig. 5(d) schematisch gezeigt. Sie dient dazu, zwei Signaleingänge 36 wahlweise mit einem Verbindungsabschnitt 42 zu verbinden.

Man beachte, dass jeder Signaleingang 36 der genannten Schaltmatrixanordnung sowohl in der Darstellung von Fig. 4(a) als auch in der Darstellung von Fig. 4(b) gezeigt ist, obwohl ein jeder der Signaleingänge 36 nur mit einem Verbindungsabschnitt 42 in einer der beiden Schaltmatrixvorrichtungen 34a, 34b verbunden ist. Beispielsweise ist der oberste Signaleingang 36a in beiden Abbildungen 34a, 34b gezeigt, aber nur mit der zugehörigen doppelten Signaleingangs-Schaltstruktur 48 in der oberen Schaltmatrixvorrichtung 34a verbunden. Auf ähnliche Weise ist der benachbarte Signaleingang 36b in beiden Figuren 4(a), 4(b) gezeigt, allerdings nur in der Figur 4(b) mit der zugehörigen doppelten Signaleingangs-Schaltstruktur 48 verbunden. Um sich vorzustellen, wie die beiden Schaltmatrixvorrichtungen 34a, 34b in der genannten Schaltmatrixanordnung übereinanderliegen, braucht man also nur die Signaleingänge 36 aus beiden Figuren 4(a), 4(b) in Deckung zu bringen.

Die Leitungen, die zu den Signaleingängen 36 führen (in der Abbildung nicht gezeigt), verlaufen senkrecht zur Papierebene von Fig. 4(a), 4(b). Da die Eingänge 36 entsprechend einer Hexagonal-Gitteranordnung angeordnet sind, können die Querschnitte der Leitungen in einer hexagonal dichtest gepackten Weise angeordnet werden.

Unter Bezugnahme auf Fig. 5 werden im Folgenden die Schaltknoten 40, 44 bzw. Signaleingangs-Schaltstrukturen 46, 48 näher erläutert.

In Fig. 5(a) ist ein Schaltknoten 40 gezeigt, an den vier Verbindungsabschnitte 42 angrenzen. Der Schaltknoten 40 umfasst vier Schaltelemente 50a-50d, die ähnlich wie in Fig. 1(b) dunkel dargestellt sind und von denen jeweils eines zwischen den an den Schaltknoten angrenzenden Enden jeweils zweier benachbarter Verbindungsabschnitte 42 angeordnet ist. Durch Betätigung der Schaltelemente 50a bis 50d können von den vier an den Schaltknoten angrenzenden Enden von Verbindungsabschnitten 42 jeweils zwei benachbarte Verbindungsabschnitte elektrisch verbunden, jedoch die beiden Paare von verbundenen Verbindungsabschnitten untereinander galvanisch getrennt werden. Dies ist beispielsweise der Fall, wenn die Schaltelemente 50a und 50c geöffnet und die Schaltelemente 50b und 50d geschlossen sind. In diesem Fall können zwei Signale 52a, 52b gleichzeitig durch denselben Knoten 40 geführt werden, wie durch die Pfeile in Fig. 5(a) dargestellt ist.

In Fig. 5(b) ist die Schaltstruktur für den Knoten 44 gezeigt, bei dem lediglich drei Verbindungsabschnitte 42 zusammenlaufen. Der Aufbau ähnelt konzeptionell demjenigen von dem Knoten 40 von Fig. 5(a), außer dass lediglich drei Schaltelemente 50a, 50b und 50c vorgesehen sind.

In Fig. 5(c) ist der Aufbau der einfachen Signaleingangs-Schaltstruktur 46 schematisch dargestellt. Sie umfasst ein erstes Schaltelement 51a, das geeignet ist, eine leitende Verbindung zwischen einem ersten (in Fig. 5(c) linken) und einem zweiten (in Fig. 5(c) rechten) Abschnitt eines Verbindungselementes 42 zu unterbrechen. Ferner umfasst sie ein zweites Schaltelement 51b, das geeignet ist, den Signaleingang 36 mit dem ersten Abschnitt des Verbindungselementes 42 zu verbinden, und ein drittes Schaltelement 51c, das geeignet ist, den Signaleingang 36 mit dem zweiten Abschnitt des Verbindungselementes 42 zu verbinden. Wenn ein Signal durch den Verbindungsabschnitt 42 durchgeleitet werden soll, wird das erste Schaltelement 51 a geschlossen und werden das zweite und dritte Schaltelement 51b, 51c geöffnet. Soll hingegen ein Signal über den Signaleingang 36 eingespeist werden, wäre das erste Schaltelement 52a geöffnet und ferner eines der beiden weiteren Schaltelemente 52b, 52c geöffnet und das andere geschlossen, je nachdem in Richtung auf welchen Schaltknoten das Signal eingespeist werden soll.

Die doppelte Signaleingangs-Schaltstruktur 48 entspricht im Wesentlichen einer Verdopplung der einfachen Signaleingangs-Schaltstruktur 46, so dass sich eine separate Beschreibung erübrigt.

Zum Auskoppeln der Signale können Signalausgangs-Schaltstrukturen verwendet werden, deren Aufbau derjenigen der einfachen Signaleingangs-Schaltstruktur 46 von Fig. 5(c) entspricht. In Fig. 4(a) und 4(b) sind diese jedoch nicht gezeigt, stattdessen sind sie, gemeinsam mit den Signalausgängen 38, lediglich durch die großen Zahlen 1, 2 und 3 repräsentiert.

Fig. 6 zeigt eine Schaltstruktur 54, mit der ein jeder der sechs Ausgänge 38, die in Fig. 4(a) und 4(b) mit derselben Zahl (d. h. 1, 2 oder 3) bezeichnet sind, mit einem zugehörigen Gesamtausgang 56 verbindbar sind. Die Schaltstruktur 54 könnte auch als Baumstruktur ausgebildet sein.

Als Nächstes wird der Betrieb der Schaltmatrixanordnung beschrieben. Die Schaltmatrixanordnung dient dazu, ein Eingangssignal, welches an einem der 385 Signaleingänge 36 anliegt, an einem von drei möglichen Gesamtausgängen 56 (s. Fig. 6) auszugeben. Als Erstes wird ermittelt, in welcher der beiden Schaltmatrixvorrichtungen 34a bzw. 34b der betreffende Signaleingang 36 liegt. In dieser Schaltmatrixvorrichtung 34a, 34b muss dann das Eingangssignal zu einem der drei Ausgänge 38 geführt werden, der seinerseits mit dem gewünschten Gesamtausgang 56 verbindbar ist. Eine Steuerung (nicht gezeigt) ermittelt dann den optimalen Signalpfad. Dazu wählt sie den günstigsten der drei möglichen Ausgänge 38 sowie den günstigsten Weg durch die Schaltmatrixvorrichtung 34a bzw. 34b dorthin aus. Um den optimalen Signalweg zu ermitteln wendet die Steuerung der bevorzugten Ausführungsform eine Kombination der folgenden Kriterien an:
1. Der Signalweg soll so wenig Schaltknoten wie möglich passieren. Daher wird unter den drei möglichen Signalausgängen 38 vorzugsweise derjenige gewählt, der am nächsten am betreffenden Signaleingang 36 liegt.
2. Der Signalweg wird so gewählt, dass er bei einen Wechsel zwischen einem Signalweg entlang einer Zeile und einem Signalweg entlang einer Spalte vorzugsweise entlang des größeren Winkels zwischen Spalten- und Zeilenverlauf verläuft. Zur Erläuterung wird auf Fig. 4(a) verwiesen, in der zwei mögliche Signalwege 58, 60 zwischen einem Signaleingang 36 und zwei möglichen Signalausgängen 38 (die beide zum dritten Gesamtausgang 56 führen) eingezeichnet sind. Beide Signalwege 58, 60 müssen vier Schaltknoten 40 durchqueren und wären nach dem ersten Kriterium daher gleichwertig. Im Hinblick auf die Signaldämpfung ist es jedoch vorteilhaft, wenn das Signal auf dem Signalweg 58 entlang des stumpfen Winkels von der Zeile auf die Spalte umgeleitet wird, anstatt entlang des spitzen Winkels, wie dies der Signalweg 60 erforderlich macht. Nach diesem Kriterium wäre also der Signalweg 58 bevorzugt.
3. Die Steuerung prüft, ob der Signalweg mit einem weiteren gewünschten Signalweg zwischen einem anderen Signaleingang 36 und einem anderen Signalausgang 38 vereinbar ist. Wenn dies nicht der Fall ist, also ein Schaltkonflikt vorliegt, muss einer der beiden Signalwege abgeändert werden, auch wenn der abgeänderte Signalweg nach dem ersten oder zweiten Kriterium nachteilig ist. Dadurch lassen sich Schaltkonflikte wirksam auflösen. Dies ist ein besonderer Vorteil der gezeigten Ausführungsform.
4. Schließlich wählt die Steuerung den Signalweg so, dass er einen defekten Schaltknoten 40 und/oder einen defekten Verbindungsabschnitt 42 vermeidet. Dies ist ein strenges Kriterium, das aus offensichtlichen Gründen stets eingehalten wird. Die Steuerung kann durch Selbsttests feststellen, ob und gegebenenfalls welche Schaltkomponente fehlerhaft ist und dies bei der Ermittlung des Signalweges berücksichtigen. Dadurch kann die Funktionsfähigkeit der Schaltmatrixanordnung als Ganzes gewährleistet werden, selbst wenn einzelne Komponenten defekt sein sollten. Dies ist bei Anwendungen, bei denen es auf höchste Zuverlässigkeit ankommt, ein entscheidender Vorteil - man denke beispielsweise an die Anwendung in einem Satelliten, bei dem kurzfristige Reparaturen ausgeschlossen sind.

In der bevorzugten Ausführungsform sind sämtliche der Schaltstrukturen durch austauschbar vorgefertigte Bauteile gebildet. Die Bauteile sind als Mikro-Elektromechanische Systeme (MEMS) ausgebildet, die sich aufgrund ihrer besonderen Robustheit anbieten.

Wie aus der obigen Beschreibung ersichtlich wird, bietet die Schaltmatrixvorrichtung 34a, 34b nach der Weiterbildung der Erfindung erhebliche Vorteile sowohl gegenüber einer herkömmlichen Schaltmatrix nach Fig. 1(a) als auch gegenüber einer Baumstruktur nach Fig. 2. Wollte man 385 Eingänge mit drei Ausgängen kombinierbar machen, bräuchte man eine herkömmliche Schaltmatrix mit 385 Spalten und 3 Zeilen. Bei jeweils zwei zufällig herausgegrif fenen gleichzeitigen Verbindungen gäbe es in 50% der Fälle einen Schaltkonflikt, und der durchschnittliche Signalweg würde rund 190 Knoten passieren. Dieser Vergleich macht die Verbesserung, die durch die Erfindung erreicht wird, sehr deutlich. Eine Baumstruktur hingegen bietet nicht die Flexibilität, Schaltungskonflikte wirksam zu vermeiden und defekte Bauteile zu umgehen.

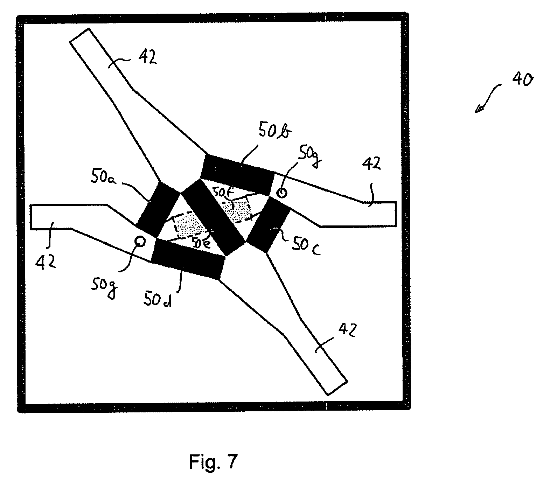

In Fig. 7 ist eine Abwandlung der Schaltknoten-Schaltstruktur von Fig. 5(a) gezeigt. Die Schaltknoten-Schaltstruktur von Fig. 7 enthält ebenso wie diejenige von Fig. 5(a) vier Schaltelemente 50a bis 50d, von denen jeweils eines zwischen den an den Schaltknoten 40 angrenzenden Enden jeweils zweier benachbarter Verbindungsabschnitte 42 angeordnet ist. Darüber hinaus umfasst die Schaltknoten-Schaltstruktur von Fig. 7 jedoch ein fünftes Schaltelement 50e, das in der selben Ebene angeordnet ist, wie die an den Schaltknoten 40 angrenzenden Enden von Verbindungsabschnitten 42 und das geeignet ist, zwei gegenüberliegende Verbindungsabschnitte 42 miteinander zu verbinden. Die beiden Verbindungsabschnitte 42, die durch das fünfte Schaltelement 50e verbindbar sind, bilden ein erstes Paar von gegenüberliegenden Verbindungsabschnitten 42.

Die beiden anderen gegenüberliegenden Verbindungsabschnitte 42 bilden ein zweites Paar und können durch ein sechstes Schaltelement 50f verbunden werden, welches in Fig. 7 hellgrau und mit gestrichelter Kontur dargestellt ist. Dieses sechste Schaltelement 50f liegt in einer anderen Ebene, als die Schaltelemente 50a bis 50e. Die verschiedenen Ebenen können beispielsweise dadurch gebildet werden, dass zwei Schaltmatrixvorrichtungen 34a, 34b übereinander gestapelt werden. In diesem Fall wären die in Fig. 7 gezeigten Verbindungsabschnitte 42 und die Schaltelemente 50a bis 50e Bestandteil der einen Schaltmatrixvorrichtung und das Schaltelement 50f Bestandteil der anderen Schaltmatrixvorrichtung. Die beiden Ebenen werden durch zwei zu den Ebenen im wesentlichen senkrechte Leiterabschnitte 50g verbunden.

Mit der Schaltknoten-Schaltstruktur von Fig. 7 können die Signale somit zwischen beliebigen zwei an den Schaltknoten 40 angrenzenden Verbindungsabschnitten 42 übertragen werden.

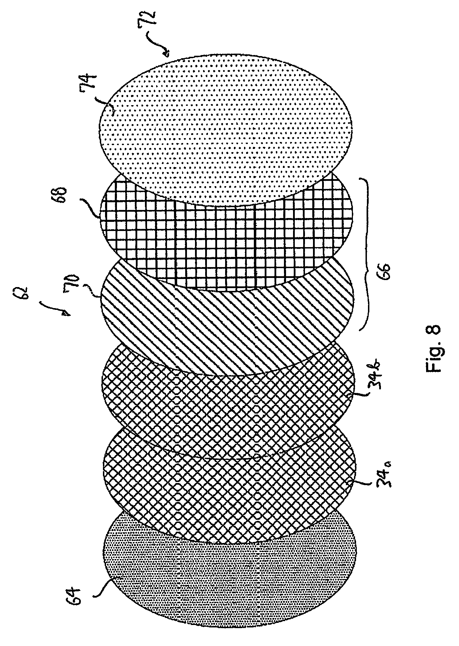

Fig. 8 zeigt den Aufbau einer Schaltmatrixanordnung 62 nach einer Weiterbildung der Erfindung. Die Schaltmatrixanordnung 62 besteht aus eine Mehrzahl übereinander angeordneter Schichten, die in Fig. 8 schematisch in einer Explosionsdarstellung dargestellt sind. Die Schaltmatrixanordnung 62 umfasst eine Ausgabeschicht 64, in der die oben genannten Gesamtausgänge 56 angeordnet sind. Darüber sind zwei Schaltmatrixvorrichtungen 34a, 34b der vorstehend beschriebenen Art angeordnet. Oberhalb der beiden Schaltmatrixvorrichtungen 34a, 34b befindet sich eine Kombinationsschalteinrichtung 66, die aus einer ersten Kombinationsschaltung 68 und einer zweiten Kombinationsschaltung 70 besteht, und deren Funktion unten beschrieben wird. Ganz oben im Stapel befindet sich eine Eingabeschicht 72 mit einer Vielzahl von ersten Eingängen 74. Die ersten Eingänge 74 sind beispielsweise mit Antennenelementen (nicht gezeigt) verbunden, bei denen es sich beispielsweise um sogenannte Antennen-Patches handeln kann, die für den Empfang von Hochfrequenzsignalen geeignet sind. Eine bevorzugte Anwendung hierfür ist eine Relaisstation für Satelliten. Man beachte, dass sich im vorstehenden Absatz die Begriffe "oben" oder "oberhalb" nur auf die Stapelrichtung beziehen, ohne dass dadurch eine bestimmte Anordnung im Raum spezifiziert werden soll.

Der Zweck der Kombinations-Schalteinrichtung 66 besteht darin, eine aus einer Mehrzahl möglicher Untergruppen der ersten Eingänge 74 galvanisch mit einem Signaleingang 36 (in Fig. 8 nicht gezeigt) der Schaltmatrixvorrichtung 34a oder 34b zu verbinden. Auf diese Weise kann nicht nur das Signal einer einzelnen Antenne in einen Signaleingang 36 der Schaltmatrixvorrichtung 34a oder 34b eingespeist werden, sondern auch eine Überlagerung von Hochfrequenzsignalen mehrerer Antennen, die der ausgewählten Untergruppe der ersten Eingänge 74 entsprechen.

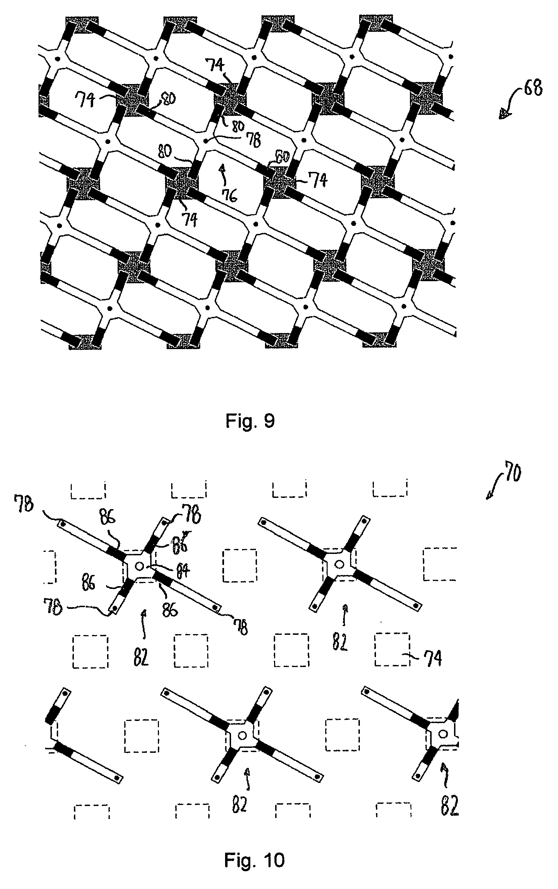

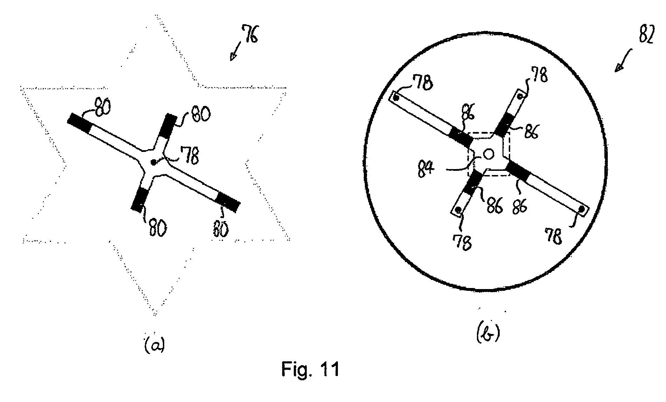

Ein Ausschnitt der ersten Kombinationsschaltung 68 ist in Fig. 9 gezeigt. Die erste Kombinationsschaltung 68 umfasst eine Vielzahl von Schalteranordnungen 76, von denen eine Fig. 11 (a) in Isolation gezeigt ist. Jede Schalteranordnung 76 hat einen Signalknoten 78, der genau zwischen vier benachbarten ersten Eingängen 74 angeordnet ist. Dieser Signalknoten 78 kann durch Betätigung der Schaltelemente 80 (in Fig. 9 schwarz dargestellt) mit den bis zu vier umliegenden ersten Eingängen 74 wahlweise verbunden werden. Somit können Untergruppen aus bis zu vier ersten Eingängen 74 wahlweise mit dem Signalknoten 78 verbunden werden. Man beachte, dass es, bis auf Randeffekte im wesentlichen ebenso viele Signalknoten 78 wie erste Eingänge 74 gibt. Tatsächlich sind die Signalknoten 78 im gezeigten Ausführungsbeispiel auf der selben Gitterstruktur angeordnet, wie die ersten Eingänge 74 (im gezeigten Ausführungsbeispiel auf einem Hexagonalgitter), jedoch jeweils um einen halben Gittervektor verschoben.

Die Signalknoten 78 werden durch zu der Papierebene von Fig. 9 senkrechte Leiter in die Ebene der zweiten Kombinationsschaltung 70 geführt, von der in Fig. 10 ein Ausschnitt gezeigt ist. In Fig. 10 sind die Signalknoten daher ebenfalls unter Bezugszeichen 78 gezeigt. Außerdem sind in Fig. 10 die Positionen der ersten Eingänge 74, genauer deren vertikale Projektion auf die Ebene der zweiten Kombinationsschaltung 70 gestrichelt dargestellt.

Wie in Fig. 10 zu sehen ist, enthält die zweite Kombinationsschaltung 70 eine Vielzahl von Schalteranordnungen 82, die es gestatten, wahlweise einen der vier Signalknoten 78, mit denen sie jeweils verbunden sind, mit einem Mittelabschnitt 84 zu verbinden. Der Mittelabschnitt 84 ist seinerseits durch einen zur Papierebene von Fig. 10 senkrechten Leiter mit einem Eingang 36 einer der beiden Schaltmatrixvorrichtungen 34a bzw. 34b verbunden. Die Schalteranordnung 82 umfasst ebenfalls Schaltelemente 86, die in Fig. 10 schwarz dargestellt sind. Eine einzelne Schalteranordnung 82 ist in Fig. 11(b) separat dargestellt.

Wie aus Fig. 9 und 10 zu entnehmen ist, erlaubt es die Kombinationsschalteinrichtung 66 unter Verwendung der ersten und zweiten Kombinationsschaltung 68, 70 einen beliebigen Eingang 74 oder eine Untergruppe von bis zu vier Eingängen 74 selektiv mit einem Eingang 36 der Schaltmatrixvorrichtung 34a oder 34b zu verbinden. Ferner erkennt man, dass die Anzahl der Schalteranordnungen 82 in der zweiten Kombinationsschaltung 70 nur ein Viertel der Anzahl von ersten Eingängen 74 beträgt. Schließlich erkennt man, dass die Mittelabschnitte 84 der Schalteranordnungen 82, und folglich die Signaleingänge 36 der Schaltmatrixvorrichtungen 34a, 34b in der selben zweidimensionalen Gitterstruktur angeordnet sein können, wie die ersten Eingänge 74, jedoch mit doppelter Gitterkonstante. In der gezeigten bevorzugten Ausführungsform sind sowohl die ersten Eingänge 74 als auch die Signaleingänge 36 der Schaltmatrixvorrichtungen 34a, 34b in einem Hexagonalgitter angeordnet, wodurch die zur Verfügung stehende Fläche optimal genutzt wird.

Zusammenfassend ermöglicht es die Kombinationsschalteinrichtung 66 mit ihrer ersten und zweiten Kombinationsschaltung 68, 70 4N erste Eingänge 74 einzeln oder in 4N Untergruppen von bis zu vier ersten Eingängen 74 wahlweise mit N Signaleingängen 36 der Schaltmatrixvorrichtungen 34a und 34b zu verbinden.

Man beachte, dass in der gesamten Beschreibung "Eingänge" und "Ausgänge" miteinander vertauscht werden können, ohne dass dies etwas an dem erfinderischen Konzept ändern würde. Die gezeigten Merkmale können in beliebigen Kombinationen von Bedeutung sein.

### Bezugszeichenliste

- 10: Schaltmatrix
- 12: Schaltknoten
- 14: Verbindungsabschnitt
- 16: Signaleingang
- 18: Signalausgang
- 20: Knotenpunkt
- 22a - d: Schalter
- 24: Signalweg
- 26: Signalweg
- 28: Signalweg
- 30: Schaltelement für Baumstruktur
- 32: Kippschalter
- 34a, b: Schaltmatrixvorrichtung
- 36: Signaleingang
- 38: Signalausgang
- 40: Schaltknoten
- 42: Verbindungsabschnitt
- 44: Schaltknoten mit drei Eingängen
- 46: einfache Signaleingangs-Schaltstruktur
- 48: doppelte Signaleingangs-Schaltstruktur
- 50a - d: Schaltelement
- 51a - c: Schaltelement
- 52a, b: Signalweg
- 54: Schaltstruktur zwischen Ausgängen 38 und Gesamtausgang 56
- 56: Gesamtausgang
- 58: Signalweg
- 60: Signalweg
- 62: Schaltmatrixanordnung
- 64: Ausgabeschicht
- 66: Kombinationsschalteinrichtung
- 68: erste Kombinationsschaltung
- 70: zweite Kombinationsschaltung
- 72: Eingabeschicht
- 74: erster Eingang
- 76: Schalteranordnung
- 78: Signalknoten
- 80: Schaltelement
- 82: Schalteranordnung
- 84: Mittelabschnitt der Schalteranordnung 82
- 86: Schaltelement

## Patentansprüche

1. Schaltmatrixvorrichtung (34a, 34b) für elektrische Signale, die eine Mehrzahl von Schaltknoten (40, 44) umfasst, welche matrixartig in Zeilen und Spalten angeordnet sind, wobei
benachbarte Schaltknoten (40, 44) innerhalb derselben Zeile bzw. Spalte durch Verbindungsabschnitte (42) verbunden oder verbindbar sind, und
zumindest ein Teil der Schaltknoten (40, 44) geeignet ist, zwei an den jeweiligen Schaltknoten (40, 44) angrenzende Verbindungsabschnitte (42) wahlweise zu verbinden,
und die geeignet ist, durch Betätigung von Schaltknoten (40, 44) einen Signaleingang (36) und einen Signalausgang (38) aus einer Mehrzahl von Signaleingängen (36) und/oder Signalausgängen (38) zu verbinden, **dadurch gekennzeichnet, dass** zumindest ein Teil der Signaleingänge (36) und/oder Signalausgänge (38) in der Fläche der Schaltmatrix angeordnet ist.

2. Schaltmatrixvorrichtung (34a, 34b) nach Anspruch 1, bei der sich die Anzahl von Signaleingängen (36) und Signalausgängen (38) um einen Faktor von mindestens 2, vorzugsweise einen Faktor von mindestens 5 und besonders vorzugsweise einen Faktor von mindestens 10 unterscheiden.

3. Schaltmatrixvorrichtung (34a, 34b) nach Anspruch 1 oder 2, bei der zumindest ein Teil der Signaleingänge (36) und/oder Signalausgänge (38) mit einem jeweils zugehörigen Verbindungsabschnitt (42) verbunden oder über einen Schalter oder eine Schaltstruktur (46, 48) verbindbar ist,
wobei der genannte zugehörige Verbindungsabschnitt (42) nicht in einer Randzeile oder Randspalte der Schaltmatrixvorrichtung (34a, 34b) angeordnet ist, und/oder bei der die Signaleingänge (36) überwiegend oder ausschließlich mit den Verbindungsabschnitten (42) der Spalten und die Signalausgänge (38) mit den Verbindungsabschnitten der Zeilen verbindbar oder verbunden sind, oder die Signaleingänge (36) überwiegend oder ausschließlich mit den Verbindungsabschnitten der Zeilen und die Signalausgänge (38) mit den Verbindungsabschnitten der Spalten verbindbar oder verbunden sind, und/oder
bei der zumindest mit einem Teil der Verbindungsabschnitte (42) jeweils mehr als ein Signaleingang (36) oder Signalausgang (38) verbindbar oder verbunden ist.

4. Schaltmatrixvorrichtung (34a, 34b) nach einem der vorhergehenden Ansprüche, bei der eine Signaleingangs- und/oder eine Signalausgangs-Schaltstruktur (46, 48) vorgesehen ist, die geeignet ist, den Signaleingang (36) bzw. Signalausgang (38) wahlweise mit einem der an den Verbindungsabschnitt (42) angrenzenden Knoten (40, 44) leitend zu verbinden und gleichzeitig eine leitende Verbindung zwischen dem Signaleingang (36) bzw. Signalausgang (38) und dem anderen an den Verbindungsabschnitt (42) angrenzenden Knoten (40, 44) zu trennen, wobei
der die Signaleingangs- oder Signalausgangs-Schaltstruktur (46, 48) folgendes insbesondere umfasst:
- einen ersten Schalter (51a), der geeignet ist, eine leitende Verbindung zwischen einem ersten und einem zweiten Abschnitt des Verbindungsabschnittes (42) zu unterbrechen,
- einen zweiten Schalter (51b), der geeignet ist, den Signaleingang (36) bzw. Signalausgang (38) mit dem ersten Abschnitt des Verbindungsabschnittes (42) zu verbinden, und
- einen dritten Schalter (51c), der geeignet ist, den Signaleingang (36) bzw. Signalausgang (38) mit dem zweiten Abschnitt des Verbindungsabschnittes (42) zu verbinden,
wobei die Schalter (51 a-c) vorzugsweise auf den Seiten eines gleichschenkligen Dreieckes, besonders vorzugsweise auf den Seiten eines gleichseitigen Dreieckes liegen, und/oder
bei der vorzugsweise einem Verbindungsabschnitt (42) zwei oder mehr der genannten Signaleingangs- und/oder Signalsausgangs-Schaltstrukturen zugeordnet sind.

5. Schaltmatrixvorrichtung (34a, 34b) nach einem der vorhergehenden Ansprüche, bei der zumindest ein Teil der Schaltknoten (40) eine Schaltknoten-Schaltstruktur auf weist, die geeignet ist, von den vier an den Schaltknoten (40) angrenzenden Enden von Verbindungsabschnitten (42) jeweils zwei benachbarte Verbindungsabschnitte (42) elektrisch zu verbinden, jedoch die beiden Paare von verbundenen Verbindungsabschnitten (42) untereinander bezüglich einer Signalübertragung, insbesondere galvanisch zu trennen, wobei
die Schaltknoten-Schaltstruktur vorzugsweise vier Schaltelemente (50a-50d) umfasst, von denen jeweils eines zwischen den an den Schaltknoten (40) angrenzenden Enden jeweils zweier benachbarter Verbindungsabschnitte (42) angeordnet ist.

6. Schaltmatrixvorrichtung (34a, 34b) nach einem der vorhergehenden Ansprüche, bei der die Schaltknoten (40, 44), die Signaleingangs-Schaltstrukturen (46, 48) und/oder die Signalausgangs-Schaltstrukturen (46, 48) durch austauschbare, vorgefertigte Bauteile gebildet werden, und insbesondere als mikro-elektromechanische Systeme (MEMS) ausgerührt sind, und/oder bei der mindestens zwei der Signalausgänge (38) und/oder Signaleingänge (36) mit einem Gesamtausgang (56) bzw. Gesamteingang verbunden oder über eine Schaltstruktur (54), insbesondere eine Baumstruktur, verbindbar sind.

7. Schaltmatrixvorrichtung (34a, 34b) nach einem der vorhergehenden Ansprüche, bei der die Zeilen und Spalten unter einem von 90° verschiedenen Winkel, vorzugsweise einem Winkel von 45° bis 75° und besonders vorzugsweise unter einem Winkel von 60° angeordnet sind, wobei
die Schaltknoten (40, 44) vorzugsweise auf einem Hexagonalgitter angeordnet sind.

8. Schaltmatrixanordnung, welche mindestens zwei Schaltmatrixvorrichtungen (34a, 34b) nach einem der Ansprüche 1 bis 7 umfasst, die übereinander gestapelt angeordnet sind, wobei vorzugsweise
mindestens zwei der Signalausgänge (38) und/oder der Signaleingänge (36) auf verschiedenen Schaltmatrixvorrichtungen (34a, 34b) verbunden, verbindbar oder mit einem gemeinsamen Gesamtausgang (56) bzw. Gesamteingang verbindbar sind.

9. Schaltmatrixvorrichtung (34a, 34b) oder Schaltmatrixanordnung nach einem der vorhergehenden Ansprüche, die ferner eine Steuerung zum Betätigen der Schaltknoten (40, 44) und/oder der Signaleingangs-Schaltstrukturen (46, 48) und/oder der Signalausgangs-Schaltstrukturen umfasst, derart, dass eine Verbindung zwischen einem vorbestimmten Signaleingang (36) oder Gesamt-Signaleingang und einem vorbestimmten Signalausgang (38) oder Gesamtsignalausgang (56) hergestellt wird, wobei bei der die Steuerung vorzugsweise dazu eingerichtet ist, einen geeigneten Schaltungszustand nach einem oder mehreren der folgenden Kriterien oder einer Kombination dieser Kriterien zu ermitteln:
- der Signalweg passiert möglichst wenige Schaltknoten (40, 44),
- der Signalweg wird so gewählt, dass er bei Wechsel zwischen einem Signalweg entlang einer Zeile und einem Signalweg entlang einer Spalte vorzugsweise entlang des größeren Winkels zwischen Spalten- und Zeilenverlauf verläuft,
- der Signalweg wird so gewählt, dass er mit einem weiteren gewünschten Signalweg zwischen einem anderen Signaleingang (36) und einem anderen Signalausgang (38) vereinbar ist,
- der Signalweg wird so gewählt, dass er einen defekten Schaltknoten (40, 44) und/oder einen defekten Verbindungsabschnitt (42) vermeidet.

10. Schaltmatrixvorrichtung (34a, 34) nach einem der vorhergehenden Ansprüche, die für die Schaltung von Hochfrequenzsignalen geeignet ist, wobei
die Schaltmatrixvorrichtung vorzugsweise angeschlossen ist, um eine frei wählbare Verbindung zwischen Antennenelementen und Transpondern herzustellen, insbesondere in einer Relaisstation für Satelliten.

11. Schaltmatrixvorrichtung (34a, 34b) nach Anspruch 5, bei der die Schaltknoten-Schaltstruktur geeignet ist, von den vier an den Schaltknoten (40) angrenzenden Enden von Verbindungsabschnitten (42) zwei gegenüberliegende Verbindungsabschnitte (42) elektrisch zu verbinden, jedoch benachbarte Verbindungsabschnitte untereinander, bezüglich einer Signalübertragung, insbesondere galvanisch zu trennen,
bei der die Schaltknoten-Schaltstruktur vorzugsweise ein fünftes Schaltelement (50e) umfasst, welches in derselben Ebene liegt, wie die an den Schaltknoten (40) angrenzenden Verbindungsabschnitte (42), und geeignet ist, zwei gegenüberliegende Verbindungsabschnitte (42) eines ersten Paares miteinander zu verbinden,
wobei der die Schaltknoten-Schaltstruktur vorzugsweise ein sechstes Schaltelement (50f) umfasst, welches in einer von der genannten Ebene beabstandeten Ebene liegt und geeignet ist, die zwei gegenüberliegenden Verbindungsabschnitte (42), die nicht Bestandteil des ersten Paares sind, miteinander zu verbinden, wobei insbesondere der zwei Leiterabschnitte (50g) vorgesehen sind, die zwischen der genannten Ebene und der Ebene des sechsten Schaltelementes (50g) verlaufen, und die jeweils einen der zwei Verbindungsabschnitte (42), die nicht Bestandteil des ersten Paares sind, mit den zugehörigen Enden des sechsten Schaltelementes (50f) verbinden, wobei
die genannte Ebene und die Ebene des sechsten Schaltelementes (50f) vorzugsweise durch zwei übereinander gestapelte Schaltmatrixvorrichtungen (34a, 34b) gebildet werden.

12. Schaltmatrixanordnung (62), die folgendes umfasst:
mindestens eine Schaltmatrixvorrichtung (34a, 34b) nach einem der Ansprüche 1-11, eine Anzahl erster Eingänge (74), und
eine Kombinationsschalteinrichtung (66), die geeignet ist, eine aus einer Mehrzahl möglicher Untergruppen der ersten Eingänge (74) galvanisch mit einem Signaleingang (36) der mindestens einen Schaltmatrixvorrichtung (34a, 34b) zu verbinden.

13. Schaltmatrixanordnung (62) nach Anspruch 12, bei der die Kombinationschalteinrichtung (66) eine erste Kombinationsschaltung (68) umfasst, die geeignet ist, sämtliche erste Eingänge (74) der betreffenden Untergruppe mit einem Signalknoten (78) zu verbinden, und
eine zweite Kombinationsschaltung (70), die geeignet ist, einen aus einer Mehrzahl von möglichen Signalknoten (78) wahlweise mit dem Signaleingang (36) der mindestens einen Schaltmatrixvorrichtung (34a, 34b) zu verbinden, und/oder bei der die erste und die zweite Kombinationsschaltung (68, 70) übereinandergestapelt angeordnet sind, und/oder
bei der die Untergruppe der ersten Eingänge (74) aus jeweils bis zu vier ersten Eingängen (74) gebildet wird.

14. Schaltmatrixanordnung (62) nach Anspruch 13, bei der die zweite Kombinationsschaltung (70) geeignet ist, einen von vier möglichen Signalknoten (78) mit dem Signaleingang (36) der mindestens einen Schaltmatrixvorrichung (34a, 34b) zu verbinden.

15. Schaltmatrixanordnung (62) nach einem der Ansprüche 12-14, bei der die ersten Eingänge (74) in derselben zweidimensionalen Gitterstruktur angeordnet sind, wie die Signaleingänge (36) der mindestens einen Schaltmatrixvorrichtung (34a, 34b), jedoch mit halber Gitterkonstante, und/oder
bei der die ersten Eingänge (74) mit Antennenelementen, insbesondere den Antennenelementen einer Relaisstation für Satelliten verbunden sind.

## Claims

1. Switch matrix device (34a, 34b) for electrical signals, comprising a plurality of switch nodes (40, 44) which are arranged in a matrix-like manner in rows and columns,
wherein adjacent switch nodes (40, 44) within the same row or column are or can be connected by connecting sections (42), and
at least some of the switch nodes (40, 44) are suitable for selectively connecting two connecting sections (42) adjacent to the respective switching node (40, 44), and
which is suitable for connecting a signal input (36) and a signal output (38) from a plurality of signal inputs (36) and/or signal outputs (38), by actuating switch nodes (40, 44), **characterized in that** at least some of the signal inputs (36) and/or signal outputs (38) are arranged in the surface of the switch matrix.

2. Switch matrix device (34a, 34b) according to Claim 1, in which the number of signal inputs (36) and signal outputs (38) differs by a factor of at least 2, preferably by a factor of at least 5 and particularly preferably by a factor of at least 10.

3. Switch matrix device (34a, 34b) according to Claim 1 or 2, in which at least some of the signal inputs (36) and/or signal outputs (38) are connected, or can be connected via a switch or a switch structure (46, 48), to a respective associated connecting section (42),
wherein the said associated connecting section (42) is not arranged in an edge row or edge column of the switch matrix device (34a, 34b), and/or in which the signal inputs (36) are or can be connected primarily or exclusively to the connecting sections (42) of the columns and the signal outputs (38) are or can be connected to the connecting sections of the rows, or the signal inputs (36) are or can be connected primarily or exclusively to the connecting sections of the rows and the signal outputs (38) are or can be connected to the connecting sections of the columns, and/or
in which, more than one signal input (36) or signal output (38) are or can be connected in each case to at least some of the connecting sections (42).

4. Switch matrix device (34a, 34b) according to any one of the previous claims, in which a signal-input switch structure and/or a signal-output switch structure (46, 48) is provided, which is suitable for optionally connecting the signal input (36) or signal output (38) to one of the nodes (40, 44) adjacent to the connecting section (42) in a conductive manner and at the same time breaking a conductive connection between the signal input (36) or signal output (38) and the other node (40, 44) adjacent to the connecting section (42), wherein
the signal-input or signal-output switch structure (46, 48) in particular comprises the following:
- a first switch (51a), which is suitable for interrupting a conductive connection between a first and a second section of the connecting section (42),
- a second switch (51b), which is suitable for connecting the signal input (36) or signal output (38) to the first section of the connecting section (42), and
- a third switch (51c), which is suitable for connecting the signal input (36) or signal output (38) to the second section of the connecting section (42),
wherein the switches (51 a-c) are preferably located on the sides of an isosceles triangle, particularly preferably on the sides of an equilateral triangle, and/or
in which preferably two or more of the said signal-input and/or signal-output switch structures are assigned to one connecting section (42).

5. Switch matrix device (34a,34b) according to any one of the previous claims, in which at least some of the switch nodes (40) comprise a switch node switch structure, which is suitable for electrically connecting in each case two adjacent connecting sections (42) of the four ends of connecting sections (42) adjacent to the switching node (40), but isolating the two pairs of connected connecting sections (42) from each other with regard to signal transmission, in particular galvanically, wherein
the switch node switch structure preferably comprises four switch elements (50a-50d), each one of which is arranged between the ends of two adjacent connecting sections (42) adjacent to the switch node (40).

6. Switch matrix device (34a,34b) according to any one of the previous claims, in which the switch nodes (40, 44), the signal-input switch structures (46,48) and/or the signal-output switch structures (46,48) are formed by replaceable, prefabricated components, and in particular are designed as micro-electro-mechanical systems (MEMS), and/or in which at least two of the signal outputs (38) and/or signal inputs (36) are connected, or can be connected via a switch structure (54), in particular a tree structure, to an overall output (56) or overall input.

7. Switch matrix device (34a,34b) according to any one of the previous claims, in which the rows and columns are arranged with an angle between them different from 90°, preferably an angle from 45° to 75°, and particularly preferably an angle of 60°, wherein the switch nodes (40, 44) are preferably arranged on a hexagonal lattice.

8. Switch matrix arrangement, which comprises at least two switch matrix devices (34a, 34b) according to one of Claims 1 to 7, which are arranged stacked on top of each other, wherein preferably
at least two of the signal outputs (38) and/or of the signal inputs (36) are or can be connected on different switch matrix devices (34a, 34b), or can be connected to a common overall output (56) or overall input.

9. Switch matrix device (34a, 34b) or switch matrix arrangement according to any one of the previous claims, which further comprises a controller for actuating the switch nodes (40, 44) and/or the signal input switch structures (46, 48) and/or the signal output switch structures, in such a way that a connection is produced between a predetermined signal input (36) or overall signal input and a predetermined signal output (38) or overall signal output (56), wherein the controller is preferably configured for determining a suitable switching status according to one or more of the following criteria or a combination of these criteria:
- the signal path passes through as few switch nodes (40, 44) as possible,
- the signal path is selected so that during a change between a signal path along a row and a signal path along a column, it preferably passes along the larger angle between the column and row directions,
- the signal path is selected so that it can be unified with a further desired signal path between another signal input (36) and another signal output (38),
- the signal path is selected so that it avoids a defective switch node (40, 44) and/or a defective connecting section (42).

10. Switch matrix device (34a, 34b) according to any of the previous claims, which is suitable for switching high-frequency signals, wherein
the switch matrix device is preferably connected in order to produce a freely selectable connection between antenna elements and transponders, in particular in a relay station for satellites.

11. Switch matrix device (34a, 34b) according to Claim 5, in which the switch node switch structure is suitable for electrically connecting in each case two opposite connecting sections (42) of the four ends of connecting sections (42) adjacent to the switching node (40), but isolating adjacent connecting sections (42) from each other with regard to signal transmission, in particular galvanically,
in which the switch node switching structure preferably comprises a fifth switch element (50e), which is located in the same plane as the connection sections (42) adjacent to the switch node (40) and is suitable for connecting two opposite connecting sections (42) of a first pair together,
wherein the switch node switch structure preferably comprises a sixth switch element (50f), which is situated in a plane a distance apart from the abovementioned plane and is suitable for connecting together the two opposite connecting sections (42) that are not part of the first pair, wherein
in particular two conductor sections (50g) are provided, which extend between the abovementioned plane and the plane of the sixth switch element (50g), and each of which connects one of the two connecting sections (42), which are not part of the first pair, to the associated ends of the sixth switching element (50f), wherein
the abovementioned plane and the plane of the sixth switch element (50f) are preferably formed by two switch matrix devices (34a, 34b) stacked one on top of the other.

12. Switch matrix arrangement (62) which comprises the following:
at least one switch matrix device (34a, 34b) according to any one of Claims 1-11,
a number of first inputs (74), and
a combination switch device (66), which is suitable for electrically connecting one of a plurality of possible subgroups of the first inputs (74) to a signal input (36) of the at least one switch matrix device (34a, 34b).

13. Switch matrix arrangement (62) according to Claim 12, in which the combination switch device (66) comprises a first combination circuit (68), which is suitable for connecting all of the first inputs (74) of the relevant subgroup to a signal node (78), and
a second combination circuit (70), which is suitable for optionally connecting one of a plurality of possible signal nodes (78) to the signal input (36) of the at least one switch matrix device (34a, 34b), and/or
in which the first and the second combination circuit (68, 70) are arranged stacked on top of each other,
and/or in which the subgroup of the first inputs (74) consists in each case of up to four first inputs (74).

14. Switch matrix arrangement (62) according to Claim 13, in which the second combination circuit (70) is suitable for connecting one of four possible signal nodes (78) to the signal input (36) of the at least one switch matrix device (34a, 34b).

15. Switch matrix arrangement (62) according to any one of Claims 12-14, in which the first inputs (74) are arranged in the same two-dimensional lattice structure as the signal inputs (36) of the at least one switch matrix device (34a, 34b), but with half the lattice constant, and/or in which the first inputs (74) are connected to antenna elements, in particular the antenna elements of a relay station for satellites.

## Revendications

1. Dispositif à matrice de commutation (34a, 34b) pour des signaux électriques, qui comprend une pluralité de noeuds de commutation (40, 44) qui sont disposés de manière matricielle en lignes et colonnes,
les noeuds de commutation (40, 44) adjacents étant reliés ou pouvant être reliés au sein de la même ligne ou colonne par des portions de liaison (42) et
au moins une partie des noeuds de commutation (40, 44) étant conçue pour relier sélectivement deux portions de liaison (42) adjacentes aux noeuds de commutation (40, 44) correspondants
et qui est conçu pour relier, par l'actionnement de noeuds de commutation (40, 44), une entrée de signal (36) et une sortie de signal (38) à partir d'une pluralité d'entrées de signaux (36) et/ou de sorties de signaux (38), **caractérisé en ce que**
au moins une partie des entrées de signaux (36) et/ou des sorties de signaux (38) est disposée dans la surface de matrice de commutation.

2. Dispositif à matrice de commutation (34a, 34b) selon la revendication 1, dans lequel les nombres d'entrées de signaux (36) et de sorties de signaux (38) sont différents d'un facteur d'au moins 2, de préférence d'un facteur d'au moins 5 et plus particulièrement de préférence d'un facteur d'au moins 10.

3. Dispositif à matrice de commutation (34a, 34b) selon la revendication 1 ou 2, dans lequel une partie des entrées de signaux (36) et/ou des sorties de signaux (38) est reliée avec une portion de liaison (42) correspondante ou peut être reliée par l'intermédiaire d'un commutateur ou une structure de commutation (46, 48),
la portion de liaison (42) correspondante mentionnée n'est pas disposée dans une ligne de bord ou une colonne de bord du dispositif à matrice de commutation (34a, 34b) et/ou dans lequel les entrées de signaux (36) peuvent être reliées ou sont reliées majoritairement ou exclusivement avec les portions de liaison (42) des colonnes et les sorties de signaux (38) peuvent être reliées ou sont reliées avec les portions de liaison des lignes ou les entrées de signaux (36) peuvent être reliées ou sont reliées majoritairement ou exclusivement avec les portions de liaison des lignes et les sorties de signaux (38) avec les portions de liaison des colonnes et/ou
dans lequel plus d'une entrée de signal (36) ou d'une sortie de signal (38) peut être reliée ou est reliée au moins avec une partie des portions de liaison (42).

4. Dispositif à matrice de commutation (34a, 34b) selon l'une des revendications précédentes, dans lequel une structure de commutation d'entrée de signal et/ou de sortie de signal (46, 48) est prévue, qui est conçue pour relier de manière conductrice l'entrée de signal (36) ou la sortie de signal (38) sélectivement avec un des noeuds (40, 44) adjacents à la portion de liaison (42) et interrompre en même temps une liaison conductrice entre l'entrée de signal (36) ou la sortie de signal (38) et l'autre noeuds (40, 44) adjacent à la portion de liaison (42),
la structure de commutation d'entrée de signal ou de sortie de signal (46, 48) comprenant plus particulièrement ce qui suit :
- un premier commutateur (51a) qui est conçu pour interrompre une liaison conductrice entre une première et une deuxième portion de la portion de liaison (42)
- un deuxième commutateur (51b) qui est conçu pour relier l'entrée de signal (36) ou la sortie de signal (38) avec la première portion de la portion de liaison (42) et
- un troisième commutateur (51c) qui est conçu pour relier l'entrée de signal (36) ou la sortie de signal (38) avec la troisième portion de la portion de liaison (42),
les commutateurs (51a-c) se trouvant de préférence sur les côtés d'un triangle isocèle, plus particulièrement de préférence d'un triangle équilatéral, et/ou
dans lequel, de préférence, à une portion de liaison (42), correspondent deux ou plus des structures de commutation d'entrées de signaux et/ou de sorties de signaux mentionnées.

5. Dispositif à matrice de commutation (34a, 34b) selon l'une des revendications précédentes, dans lequel au moins une partie des noeuds de commutation (40) présente une structure de commutation de noeuds de commutation qui est conçue pour relier électriquement, parmi quatre extrémités adjacentes aux noeuds de commutation (40) de portions de liaison (42), deux portions de liaison (42) adjacentes, mais de séparer galvaniquement les deux paires de portions de liaison (42) reliées entre elles en ce qui concerne une transmission de signaux, plus particulièrement galvaniquement,
la structure de commutation des noeuds de commutation comprenant de préférence quatre éléments de commutation (50a-50d), dont un est disposé au niveau des extrémités adjacentes aux noeuds de commutation (40) de deux portions de liaison (42) adjacentes.

6. Dispositif à matrice de commutation (34a, 34b) selon l'une des revendications précédentes, dans lequel les noeuds de commutation (40, 44), les structures de commutation d'entrées de signaux (46, 48) et/ou les structures de commutation de sorties de signaux (46, 48) sont constituées de composants préfabriqués interchangeables et sont réalisés plus particulièrement sous la forme de systèmes micro-électromécaniques (MEMS) et/ou dans lequel au moins deux des sorties de signaux (38) et/ou des entrées de signaux (36) sont reliées avec une sortie commune (56) ou une entrée commune ou peuvent être reliées par l'intermédiaire d'une structure de commutation (54), plus particulièrement une structure arborescente.

7. Dispositif à matrice de commutation (34a, 34b) selon l'une des revendications précédentes, dans lequel les lignes et les colonnes sont disposées entre elles avec un angle différent de 90°, de préférence avec un angle de 45° à 75° et plus particulièrement de préférence avec un angle de 60°,
les noeuds de commutation (40, 44) étant disposés de préférence sur une grille hexagonale.

8. Dispositif à matrice de commutation qui comprend au moins deux dispositifs à matrices de commutation (34a, 34b) selon l'une des revendications 1 à 7, qui sont empilés les uns sur les autres,
de préférence au moins deux des sorties de signaux (38) et/ou des entrées de signaux (36) étant reliées, pouvant être reliées ou pouvant être reliées avec une sortie commune (56) ou une entrée commune, sur différents dispositifs à matrices de commutation (34a, 34b).

9. Dispositif à matrice de commutation (34a, 34b) ou disposition à matrice de commutation, selon l'une des revendications précédentes, qui comprend en outre un dispositif de commande pour l'actionnement des noeuds de commutation (40, 44) et/ou des structures de commutation des entrées de signaux (46, 48) et/ou des structures de commutation des sorties de signaux, de façon à ce qu'une liaison soit établie entre une entrée de signal (36) prédéterminée ou une entrée de signal commune et une sortie de signal (38) prédéterminée ou une sortie de signal commune (56),
dans lequel le dispositif de commande est conçu de préférence pour déterminer un état de commutation approprié selon l'un ou plusieurs des critères suivants ou une combinaison de ces critères :
- le trajet des signaux passe par le moins possible de noeuds de commutation (40, 44)
- le trajet des signaux est choisi de façon à ce que, lors d'un changement entre un trajet de signal le long d'une ligne et un trajet de signal le long d'une colonne, il s'étende le long de l'angle le plus important entre le tracé de la colonne et le tracé de la ligne,
- le trajet de signaux est choisi de façon à ce qu'il puisse être fusionné avec un autre trajet de signaux souhaité entre une autre entrée de signal (36) et une autre sortie de signal (38),
- le trajet des signaux est choisi de façon à éviter un noeuds de commutation (40, 44) défectueux et/ou une portion de liaison (42) défectueuse.

10. Dispositif à matrice de commutation (34a, 34) selon l'une des revendications précédentes, qui est conçu pour la commutation de signaux à haute fréquence,
le dispositif à matrice de commutation étant de préférence connecté pour établir une liaison pouvant être sélectionnée librement entre des éléments d'antennes et des transpondeurs, plus particulièrement dans une station de relais pour des satellites.

11. Dispositif à matrice de commutation (34a, 34b) selon la revendication 5, dans lequel la structure de commutation de noeuds de commutation est conçue pour relier électriquement, parmi les quatre extrémités adjacentes aux noeuds de commutation (40), deux portions de liaison (42) opposées, mais de séparer entre elles des portions de liaison adjacentes, en ce qui concerne une transmission de signaux, plus particulièrement galvaniquement,
dans lequel la structure de commutation de noeuds de commutation comprend de préférence un cinquième élément de commutation (50e) qui se trouve dans le même plan que les portions de liaison (42) adjacentes aux noeuds de commutation (40) et qui est conçu pour relier entre elles deux portions de liaison (42) d'une première paire,
la structure de commutation de noeuds de commutation comprenant de préférence un sixième élément de commutation (50f) qui se trouve dans un plan éloigné du plan mentionné et qui est conçu pour relier entre elles deux portions de liaison (42) opposées qui ne font pas partie de la première paire,
plus particulièrement, deux portions conductrices (50g) étant prévues, qui s'étendent entre le plan mentionné et le plan du sixième élément de commutation (50g) et qui relient chacun une des deux portions de liaison (42), qui ne font pas partie de la première paire, avec les extrémités correspondantes du sixième élément de commutation (50f),
le plan mentionné et le plan du sixième élément de commutation (50f) étant formés de préférence par deux dispositifs à matrice de commutation (34a, 34b) empilés l'un sur l'autre.

12. Disposition de matrice de commutation (62) qui comprend ce qui suit :
au moins un dispositif à matrice de commutation (34a, 34b) selon l'une des revendications 1-11,
un nombre de premières entrées (74) et
un dispositif de commutation combiné (66) qui est conçu pour relier galvaniquement une parmi une pluralité de sous-groupes possibles des premières entrées (74) avec une entrée de signal (36) de l'au moins un dispositif à matrice de commutation (34a, 34b).

13. Disposition de matrice de commutation (62) selon la revendication 12, dans laquelle le dispositif de commutation combiné (66) comprend un premier circuit combiné (68) qui est conçu pour relier toutes les premières entrées (74) du sous-groupe concerné avec un noeuds de signal (78) et
un deuxième circuit combiné (70) qui est conçu pour relier sélectivement un parmi une pluralité de noeuds de signaux (78) possibles avec l'entrée de signal (36) de l'au moins un dispositif à matrice de commutation (34a, 34b) et/ou
dans laquelle le premier et le deuxième circuits combinés (68, 70) sont empilés l'un sur l'autre et/ou
dans laquelle le sous-groupe des premières entrées (74) est constitué de jusqu'à quatre premières entrées (74).

14. Disposition de matrice de commutation (62) selon la revendication 13, dans laquelle le deuxième circuit combiné (70) est conçu pour relier un parmi quatre noeuds de signaux (78) possibles avec l'entrée de signal (36) de l'au moins un dispositif à matrice de commutation (34a, 34b).

15. Disposition de matrice de commutation (62) selon l'une des revendications 12 à 14, dans lequel les premières entrées (74) sont disposées dans la même structure de grille bidimensionnelle que les entrées de signaux (36) de l'au moins un dispositif à matrice de commutation (34a, 34b), cependant avec une demi-constante de grille et/ou
dans lequel les premières entrées (74) sont reliées avec des éléments d'antennes, plus particulièrement les éléments d'antennes d'une station relais pour satellites.
